(19) Europäisches Patentamt
European Patent Office
Office européen des brevets

(11) **EP 3 628 835 A1**

(12) **EUROPEAN PATENT APPLICATION**

(43) Date of publication:
**01.04.2020 Bulletin 2020/14**

(51) Int Cl.:
*F01N 3/20* (2006.01)     *F01N 9/00* (2006.01)

(21) Application number: **18197416.3**

(22) Date of filing: **28.09.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Winterthur Gas & Diesel Ltd.**
**8401 Winterthur (CH)**

(72) Inventor: **Brutsche, Martin**
**8418 Schlatt (CH)**

(74) Representative: **Hepp Wenger Ryffel AG**
**Friedtalweg 5**
**9500 Wil (CH)**

(54) **EXHAUST GAS AFTERTREATMENT SYSTEM**

(57)     The present invention relates to exhaust gas aftertreatment systems (10), to combustion engines (20), preferably large vessel engines, and to methods for reducing $NO_x$ emissions in a combustion machine. An exhaust gas aftertreatment system (10) for a combustion engine (20) having at least one cylinder (21), preferably a large vessel engine with at least one cylinder (21) having an inner diameter of at least 200mm, comprises an exhaust gas receiver (11) and preferably a SCR-reactor (12) being arranged in or downstream the exhaust gas receiver (11). The exhaust gas aftertreatment system (10) comprises at least one valve (9), preferably with a flap (13), preferably arranged downstream of a SCR-reactor (12). The exhaust gas aftertreatment system (10) comprises a measuring device (14) for measuring the opening degree of the valve (9), preferably comprising a sensor for measuring the angular position (a) of at least one valve flap (13).

Fig. 1

**Description**

The present invention relates to exhaust gas aftertreatment systems, to combustion engines, preferably large vessel engines, and to methods for reducing $NO_x$ emissions in a combustion machine.

It is known in the prior art to clean exhaust from internal combustion engines, preferably from two-stroke, cross-head large vessel engines.

A large vessel engine according to this invention is an internal combustion engine whose cylinders have an inner diameter of at least 200mm. The engine comprises at least one cylinder with a cylinder outlet for an exhaust gas of the cylinder.

There are several cleaning principals for removing different unwanted components such as $NO_x$, $CO_x$ or sulfuric compounds known from the prior art.

In particular it is known to employ selective catalytic reduction (SCR) to reduce for example nitrogen emissions. For this purpose, catalytic elements are for example arranged in an exhaust manifold and the exhaust gas is guided through the catalytic elements. For the selective catalytic reduction a reducing agent, such as urea, has to be added to the exhaust gas.

Presently, all of the cleaning mechanisms are based on a rough indication of how much of the unwanted compound is present and thus how much can be cleaned and has to be cleaned, especially with respect to an appropriate dosing of the reducing agent. Furthermore it is necessary to provide a flow as even as possible of gas through the catalytic elements to improve the life span of the catalytic elements.

DE 10 2016 205 299 A1 shows an internal combustion engine with an exhaust gas treatment system. The exhaust gas of multiple cylinders is collected in a mixing pipe, which guides the exhaust gas to the treatment system. At an outflow of the mixing pipe, a flow of the exhaust gas is redirected by about 180° and after the redirection been led through a SCR catalyst. The arrangement shown in DE 10 2016 205 299 leads to a disadvantageous use of space. The proposed arrangement is complicated and thus costly and complex.

EP 3 050 615 A1 shows a flow unit for cleaning of an exhaust gas. The flow unit comprises a guiding surface and a break surface. In one embodiment, EP 3 050 615 A1 shows a flow element which can be arranged in the exhaust system (Fig. 8).

It is therefore an object of the present invention to avoid the disadvantages of the prior art and in particular to create exhaust gas aftertreatment systems, internal combustion engines and a method of measuring a component of exhaust in an exhaust gas which allow for an effective usage of an exhaust gas system and a more exact determination of a component of exhaust in an exhaust gas.

According to the invention, these objects are accomplished by systems, engines and methods according to the independent patent claims.

According to a first aspect of the invention an exhaust gas aftertreatment system for a combustion engine comprises an exhaust gas receiver and preferably a SCR-reactor.

The combustion engine has at least one cylinder, preferably is a large vessel engine with at least one cylinder having an inner diameter of at least 200mm.

The engine preferably is a two-stroke, cross-head engine. The engine can be a diesel engine, a dual-fuel engine, for example capable of running on a gaseous fuel, for example liquified natural gas or liquefied petrol gas, and/or a liquid fuel, for example diesel or marine diesel oil or heavy fuel oil, or a multi-fuel engine.

The exhaust gas receiver may be formed by an exhaust manifold including at least one manifold inlet for an exhaust gas of the internal combustion engine and at least one housing outlet for guiding the exhaust gas to an exhaust treatment area.

The SCR-reactor may be arranged in the exhaust gas receiver or downstream the exhaust gas receiver, for example in an exhaust treatment area.

The exhaust gas aftertreatment system comprises at least one valve, preferably with a flap.

The valve may comprise a moveable valve body and a fixedly mounted valve seat. The valve may comprise flaps or may be a disc valve, a slide valve, a seat valve and/or a poppet valve.

The valve is preferably a passive valve that allows only one flow direction and closes and/or opens by a counter pressure. For example the valve closes due to a gravitational force on a flap and/or due to a restoring force of a spring and opens due to a pressure by the exhaust gas.

The valve preferably is arranged downstream of a SCR-reactor.

The exhaust gas aftertreatment system comprises a measuring device for measuring the opening degree of the valve.

For example the measuring device may detect the distance between a moveable valve body and a fixedly arranged valve seat. Preferably the measuring device comprises a sensor for measuring the angular position of at least one valve flap, for example the angular position of an exhaust gas damper.

The more the valve is open, the more gas may flow through the valve. Hence, the opening degree of the valve may be used as a measure for the volume of gas flowing through the valve.

In case the valve is a passive or at least partially passive valve, the opening degree may be used as a measure for the pressure on the valve due to the gas flow, and hence for the gas flow velocity.

In an advantageous embodiment of the system the exhaust gas aftertreatment system comprises a control unit for determining the exhaust gas flow velocity on the basis of the opening degree of the valve, preferably of the angular position of at least one valve flap.

The control unit may comprise a rule or a map which may be stored in the storage of the control unit and by which a correlation between the measured opening degree and the gas flow velocity may be deduced.

As also the opening area of the flap may be determined from the opening degree, the volume flow can be determined. Usually an exhaust gas temperature and a pressure of the temperature are measured in a combustion engine. Thus also the density of the exhaust and the mass flow may be calculated.

The mass flow can otherwise only be determined by very expensive ultrasonic devices, or with a Prandtl pipe or an impeller, which are difficult to be used in a continuous measurement. Especially in an environment with a high particle mass flow contamination may be provoked which can only be eliminated with a great deal of maintenance effort.

Preferably the exhaust gas aftertreatment system comprises a temperature sensor and a pressure sensor.

Preferably the exhaust gas aftertreatment system further comprises a control unit for determining the exhaust gas mass flow on the basis of the temperature, the pressure and the opening degree, preferably the angular position of a flap.

In a preferred embodiment of the system the exhaust gas aftertreatment system comprises a dosing unit for a reducing agent. The exhaust gas aftertreatment system further comprises a control unit for determining the amount of reducing agent on the basis of the opening degree, preferably the angular position.

The control unit may also determine the exhaust gas mass flow on the basis of the temperature, the pressure and the opening degree.

The dosing unit may comprise or be connected to a reservoir containing the reducing agent.

Preferably the reducing agent is injectable into an exhaust gas inlet by means of a nozzle of the dosing unit.

Depending on the opening degree of the valve, the pressure and the temperature in the exhaust gas aftertreatment system, a mass flow may be determined.

The legislation requires a certain $NO_x$ value measured in g/kWh downstream a SCR reactor or downstream a turbocharger which is fed by the exhaust gas aftertreatment system, in particular downstream of the funnel of the vessel. To achieve the correct amount of $NO_x$, it is necessary to know the amount of $NO_x$ upstream of the SCR reactor and to dose the reducing agent properly.

The quantity to be dosed depends on the mass flow of the exhaust gas, the engine load and the relative content of $NO_x$, measured in $ppm/m^3$, of the exhaust gas entering the aftertreatment system.

The relative $NO_x$ content may be measured, may be determined according to a model or according to an empirical map depending on the current operating conditions of the combustion engine.

The models or maps may be stored in the control unit or may be available to the control unit.

The difference between the measured $NO_x$ content and the limit given by legislation determines the amount of the reducing agent to be dosed.

In an advantageous embodiment of the system the exhaust gas aftertreatment system comprises at least one set of valve flaps, preferably at least one valve with at least one set of valve flaps. The exhaust gas aftertreatment system comprises at least one sensor for measuring the angular position of at least one of the valve flaps in the set of valve flaps.

Preferably the set of valve flaps is arranged downstream of a SCR-reactor.

Advantageously the exhaust gas aftertreatment system comprises at least one set of valve flaps, preferably being arranged downstream of the SCR-reactor, wherein the valve flaps of the set are connected to each other, preferably by a connector. Preferably the flaps are connected, such that all valve flaps have the same angular position.

The flaps perform a coupled movement, preferably all having the same opening degree at a time. Hence, the flow through all flaps is evenly distributed.

The sensor only needs to detect the opening degree of one of the flaps for determining the opening degree of the valve.

In a beneficial embodiment the exhaust gas aftertreatment system comprises a pretensioned valve, in particular at least one valve flap wherein the valve flap is pretensioned, for example by a spring, in particular a torsional spring.

Hence, the valve is prevented from shaking or flattering due to flow turbulences and the opening degree is a trustworthy measure for the amount of the exhaust gas flowing through the exhaust gas aftertreatment system.

The measuring device may comprise a sensor.

The sensor may detect a distance between two elements of a valve, preferably two closing elements. The sensor may also detect an opening angle of a valve closing element. The sensor may also detect a distance or an angle of a valve actuating element with respect to a fixed valve element.

The sensor may be arranged within a housing of the aftertreatment system or may be arranged externally.

The valve may comprise at least one flap having a flap rotary axis, the at least one flap being arranged inside the frame. The valve may further comprise an outside element, which is connected to the shaft of the flap and which is arranged outside the housing, for example for turning the at least one flap at least partially around a flap rotary axis. The sensor may detect the position of the outside element. Hence the measuring device and/or the sensor may be arranged in a cold area, and the measurement is not disturbed by the exhaust gas.

The sensor may be an optical sensor, an acoustical sensor, a magnetic sensor or an electro-magnetic sensor.

The measuring device may comprise a video device and an evaluation unit for analysing the video signal.

The exhaust gas aftertreatment system may comprise at least one valve flap and a sensor for measuring the momentum of the at least one valve flap. In particular a momentum caused by a spring force pretensioning the valve may be measured. The momentum is correlated to the dynamic pressure on the valve and hence to the opening degree. Hence a sensor for measuring the momentum can also be regarded as a sensor for measuring the opening degree.

The flow velocity can be deduced from a measurement of the momentum.

Preferably the at least one valve of the exhaust gas aftertreatment system comprises at least one valve flap and the at least one valve flap closes due to gravity.

The valve flap hence does not need a powerful actuating system. The complete closure movement or at least a relevant part of the closure movement is caused by the weight of the flap.

Assuming a one-dimensional flow and omitting local pressure differences the momentum $M_{schliess}$ of the flap with a mass $m_{Klappe}$ can be determined by the following formula.

$$M_{schliess}(\alpha) = m_{Klappe} \cdot \vec{g} \cdot r \cdot \sin \alpha + k_f \cdot \alpha$$

,

wherein r is the distance between the pivot point and the center of gravity, g is the acceleration due to gravity, $\alpha$ is the opening angel of the flap and $k_f$ is the spring constant of the pretensioning spring.

When the exhaust gas is considered to be an ideal gas with a gas constant $R_{exh}$, which is homogenous at the messure point, the density $\rho$ can be determined by the follwong formula:

$$\rho = \frac{p_{exh,abs}}{R_{exh}} \cdot T_{exh}$$

,

wherein $T_{exh}$ is the temperature and $p_{exh,abs}$ is the pressure of the exhaust gas.

The dynamic pressure $p_{dyn}$,

$$p_{dyn} = \frac{\rho}{2} \cdot \vec{v}^2$$ ,

of a gas with a velocity v and a density $\rho$ causes a opening force $F_{dyn}$ on the effective surface of flap, perpendicular to the flow direction.

$$F_{dyn}(\alpha) = \frac{\rho}{2} \cdot \vec{v}^2 \cdot A_{Klappe} \cdot \cos \alpha$$

,

wherein $A_{Klappe}$ is the total flap area.

The opening momentum $M_{dyn}$ of the flap results from the product of the opening force $F_{dyn}$ and the distance between the pivot point and the center of gravity in flow direction r cos($\alpha$).

$$M_{dyn}(\alpha, \vec{v}) = \frac{\rho}{2} \cdot \vec{v}^2 \cdot A_{Klappe} \cdot r \cdot \cos^2 \alpha$$ .

When the openeing moment $M_{dyn}$ is bigger than the closing moment $M_{schliess}$, the flap will open and the opening angel will change until a balance is achieved, wherein

$$M_{dyn}(\alpha, \vec{v}) = M_{schliess}(\alpha)$$

or

$$\frac{\rho}{2} \cdot \vec{v}^2 \cdot A_{Klappe} \cdot r \cdot \cos^2 \alpha = m_{Klappe} \cdot \vec{g} \cdot r \cdot \sin \alpha + k_f \cdot \alpha \quad .$$

Hence, depending on the opening angle $\alpha$ the flow velocity can be determined.

$$\vec{v}(\alpha) = \sqrt{\frac{2 \cdot (m_{Klappe} \cdot \vec{g} \cdot r \cdot \sin \alpha + k_f \cdot \alpha)}{\rho \cdot A_{Klappe} \cdot r \cdot \cos^2 \alpha}} \quad .$$

The exhaust gas volume flow $V_{exh}$ can be determined by the flow velocity and the opening area $A_{offen}$ released by the flap.

$$\dot{V}_{exh} = A_{offen} \cdot \vec{v} \quad .$$

The volume flow rate of a urea-water mixture to be injected, for example, is directly proportional to the product of the exhaust gas volume flow $V_{exh}$ and the volume concentration $C_{NOx}$ of $NO_x$ in the exhaust gas.

The valve may be connected to an actuating system to provide a complete closing, especially since the exhaust gas aftertreatment system might not keep constantly a perfectly oriented position.

In an ideal position, for example when the vessel, in which the exhaust gas aftertreatment system is installed, is in a harbour, the exhaust gas aftertreatment system may be oriented, such that the flaps are in a completely closed position without any gas pressure and the flaps are only opened when there is an exhaust gas pressure.

However, when the vessel is on its way or when the vessel is not optimally loaded, the orientation of the exhaust gas aftertreatment system may deviate from the optimal orientation.

In this case the direction of the restoring force may vary and the opening degree of a valve flap may not only be influenced by the pressure due to gas flow but also by the orientation of the valve with respect to gravity.

Hence in a preferred embodiment of the system the exhaust gas aftertreatment system comprises a measuring device for determination of the spatial orientation of the valve with respect to the direction of the gravity vector.

In particular the measuring device may determine the deviation of a current orientation of a valve element which is fixedly connected to the engine, for example a closing face of a valve flap, with respect to the gravity vector.

The measuring device may be a gyroscope.

For the calculation of the opening force due to a gas pressure not only the opening degree of the valve but also its position with respect to the gravity sensor should be taken into account, since the opening degree might not only be influenced by the gas.

The control unit may use the measurement values of the spatial orientation for correcting the calculation of the exhaust gas flow velocity and/or for correcting the calculation of the massflow.

The object of the invention is also accomplished by a combustion engine having at least one cylinder with a cylinder outlet for an exhaust gas comprising an exhaust gas aftertreatment system as described above.

The combustion engine preferably is a large vessel engine with at least one cylinder having an inner diameter of at least 200mm.

The engine preferably is a two-stroke, cross-head engine. The engine can be a diesel or a dual-fuel engine.

The object of the invention is also accomplished by a combustion engine, preferably as described above, having at least one cylinder with a cylinder outlet for an exhaust gas comprising an exhaust gas aftertreatment system, preferably as described above.

The combustion engine preferably is a large vessel engine with at least one cylinder having an inner diameter of at least 200mm.

The engine preferably is a two-stroke, cross-head engine. The engine can be a diesel or a dual-fuel engine.

The combustion engine comprises a SCR reactor. The combustion engine further comprises at least one valve, preferably comprising at least one flap, arranged upstream and/or downstream the SCR reactor, and the combustion engine comprises a sensor for measuring the opening degree of the valve, in particular an angular position of at least one valve flap.

The combustion engine comprises a dosing unit for a reducing agent. Said reducing agent is preferably injectable into an exhaust gas inlet.

The combustion engine comprises a control unit for determining the amount of reducing agent on the basis of the opening degree.

The valve may be arranged in an exhaust gas aftertreatment system as described above.

In a beneficial embodiment the at least one valve is arranged in a scavenge air receiver.

The valve may be a valve, which protects a turbocharger arranged upstream of the scavenge air receiver from backflow. When additionally the fuel mass flow is determined, the mass flow of the exhaust gas can be deduced from the opening degree of a valve arranged upstream the cylinder.

The object of the invention is also accomplished by a method for reducing $NO_x$ emissions in a combustion engine, in particular in a combustion engine as described above.

The combustion engine preferably is a large vessel engine with at least one cylinder having an inner diameter of at least 200mm.

The engine preferably is a two-stroke, cross-head engine. The engine can be a diesel or a dual-fuel engine.

The method comprises the step of determining the amount of a reducing agent, which is injected into an exhaust gas inlet by means of an adjustment parameter.

Said adjustment parameter is derived from the measurement of the opening degree of at least one valve, the at least one valve is arranged upstream and/or downstream of the SCR-reactor.

In particular, the adjustment parameter is derived from the measurement of an angular position of at least one valve flap.

In a preferential embodiment of the method the temperature and the pressure are measured and the mass flow of the exhaust gas is determined on the basis of the temperature, the pressure and the opening degree of the at least one valve.

In a beneficial step the method comprises the step of calibrating to establish a relation between the adjustment parameter, in particular the opening degree of the valve, and the gas velocity and/or the mass flow and/or the appropriate amount of the reducing agent. The determination of the amount of a reducing agent, which is injected into an exhaust gas inlet, may base at least on this relation.

In particular the opening degree, in particular the angular position of at least one valve flap, is measured by a sensor.

In a further favourable embodiment of the method additionally the mass flow of the consumed fuel is determined. The massflow of the exhaust gas is determined on the basis of the massflow of the consumed fuel and on the basis of the opening degree of the at least one valve, wherein the valve preferentially is arranged in the scavenge air receiver. In particular the angular position of a valve flap is measured.

Preferably a restoring force of a valve spring is taken into account for calculating the quantity of a reducing agent, which is injected into an exhaust gas inlet.

Advantageously a deviation of the current valve orientation with respect to the gravity vector is measured. Preferably the determination of the mass flow is corrected due to the deviation.

The object of the invention is also accomplished by the use of flaps in an exhaust gas aftertreatment system for determination of the mass flow of an exhaust gas.

According to a second aspect of the invention an exhaust gas aftertreatment system, preferably as described above, for a combustion engine comprises a SCR-reactor and at least one reactor outlet valve arranged downstream of a SCR-reactor. At least one reactor outlet valve is a non-return valve, preferably comprising non-return-flaps.

The exhaust gas aftertreatment system may comprise an exhaust manifold and at least one exhaust treatment area with a first and a second treatment section. In each section there may be arranged a SCR reactor, and each section may comprise a reactor outlet valve. The treatment area may comprise a single reactor inlet valve or each section may comprise a reactor inlet valve.

The exhaust gas aftertreatment system may also comprise a bypass. The bypass may be opened and closed with one or more bypass valves. The bypass valves may be arranged at an outlet of the exhaust manifold. The bypass bypasses the exhaust treatment sections. Hence in case the exhaust gas is bypassed the non-return valve prevents exhaust gas from streaming in the SCR reactor.

Non return valves, in particular valves with non-return flaps, generally are cost effective and only need low maintenance.

The non-return valve may be a passive valve, which does not need to be activated by an external force.

A sensor may be arranged close to the non-return valve for measuring the opening degree and for determining the flow velocity and preferably the mass flow of the exhaust gas.

Preferably the exhaust gas aftertreatment system comprises at least two SCR-reactors, wherein at least one reactor inlet valve and/or at least one reactor outlet valve is a flow-control valve and/or comprise a valve spring with a certain return force. Each of the SRC reactors may be arranged in a respective treatment section spatially separated from each other.

By setting off the flow-control valve the overall flow within the treatment area may be influenced. If for example due to spatial conditions more gas would flow through a first SCR reactor, the respective flow control valve may be set to let through less gas. Hence, a uniform flow distribution may be achieved.

Additionally or alternatively the return force of a spring valve may be chosen to compensate for the external flow conditions.

The exhaust gas aftertreatment system may also comprise a measuring unit for determining the opening degree of at least one of the valves.

The object of the invention is also accomplished by a combustion engine comprising an exhaust gas aftertreatment system as described above.

According to a third aspect of the invention an exhaust gas aftertreatment system, preferably as described above with respect to the first and/or second aspect of the invention, for a combustion engine comprises at least two SCR-reactors.

At least one reactor inlet valve is arranged upstream of each SCR-reactor and preferably at least one reactor outlet valve is arranged downstream of each SCR-reactor.

In a preferred embodiment at least the reactor inlet valve being arranged upstream the first SCR reactor is a first flow control valve and preferably the reactor outlet valve being arranged downstream the first SCR reactor is a second flow control valve. The combustion engine preferably is a large vessel engine with at least one cylinder having an inner diameter of at least 200mm.

The engine preferably is a two-stroke, cross-head engine. The engine can be a diesel or a dual-fuel engine.

The exhaust gas aftertreatment system further comprises a control unit, which may provide for closing the first flow control valve and preferably the second flow control valve. In particular control the unit provides for the first flow control valve and preferably the second flow control valve staying closed during a heating-up time.

The valves arranged upstream and downstream of the second SCR reactor may be passive valves, for example non-return flap valves, that may be opened when a flow pressure is applied. Hence the gas may pass only the second SCR reactor during the heating-up time.

Exhaust gas aftertreatment systems for marine applications are designed to control $NO_x$ emission. Depending on the location, environment zones and power of the vessel, different emission limitations need to be complied.

The performance is highly depending on temperature. However, emission legislation requires sufficient aftertreatment efficiency, even at low load, when the exhaust gas temperature regularly is on a level being critical for the SCR process.

Therefore, the time demand for heating up the aftertreatment systems, especially the SCR reactor, to a minimum operation temperature should be kept as low as possible, to get the system ready for full aftertreatment efficiency as fast as possible.

The start-up time may be shortened, when the aftertreatment system comprises more than one flow path. Thus the aftertreatment system allows selective operation of certain parts of the system and only a reduced number of SCR reactors. The exhaust gas is controlled in a way that just a part of the total SCR volume gets passed by the exhaust gas flow. Therefore the total heat energy of the exhaust gas is heating up the used volume faster than it would be in the case of the complete volume.

The exhaust gas aftertreatment system may comprise an exhaust manifold and at least one exhaust treatment area with at least a first and at least a second treatment section. Each of the SRC reactors may be arranged in a respective treatment section spatially separated from each other.

Each area may comprise a reactor inlet valve and preferably at least one reactor outlet valve, preferably at least one reactor outlet valve per SCR-reactor.

Each section may comprise a reactor inlet valve and preferably at least one reactor outlet valve.

Preferably the aftertreatment system comprises a temperature sensor, and more preferably a control unit which opens the first flow control valve and preferably the second flow control valve as soon as a required temperature is achieved.

The object of the invention is also accomplished by a combustion engine comprising an exhaust gas aftertreatment system as described above.

The object of the invention is also accomplished by a method for reducing $NO_x$ emissions in a combustion engine as described above.

The combustion engine preferably is a large vessel engine with at least one cylinder having an inner diameter of at least 200mm.

The engine preferably is a two-stroke, cross-head engine. The engine can be a diesel or a dual-fuel engine.

The method comprises the step of closing at least the first flow control valve and preferably the second flow control valve. Preferably the method comprises the step of keeping the valves closed during a heating-up time.

Advantageously the method comprises the step of allowing the valves arranged upstream and downstream of the second SCR reactor to open.

Preferably the temperature in the aftertreatment system is measured. The first flow control valve and preferably the second flow control valve may be opened as soon as the temperature corresponds to a required temperature value.

SCR reactor means the part of the exhaust gas aftertreatment system, where the SCR reaction takes place. However, two or more of these parts may be hosted in one casing.

The valves used in a combustion engine or in an exhaust gas aftertreatment system as described above may comprise a frame at least having a first and a second side element. The valve may comprise at least one flap having a flap rotary axis, the at least one flap being arranged inside the frame. The valve may comprise an activation element for turning the at least one flap at least partially around a flap rotary axis. The activation element may be arranged outside the frame and at a distance D from the first side element such that a structural element of the exhaust path is arrangeable between activation element and side element.

By arranging the activation element outside of the exhaust housing, the activation element is not in contact with any exhaust and therefore the valve is durable. Furthermore, the cross section of the valve is maximized due to the activation element not taking any place inside the exhaust housing. Furthermore, the flap rotary axis is easily fixed in the frame and the structural element is furthermore easily connected to the flap rotary axis such that the complete valve is securely positioned and easily activatable inside an exhaust housing. The distance D is defined as the distance between the outer edge of the side element and an activation element or a linkage.

An exhaust housing according to this invention can be any housing in which exhaust is collected or flowing. The exhaust housing can be only an exhaust manifold or an exhaust pipe. The exhaust housing further can be a combined housing for an exhaust manifold and exhaust pipes as well as for example exhaust cleaning devices such as selective catalytic reduction reactors.

The distance D can be in a range between 30 mm to 300 mm, in particular 50 mm to 100 mm, preferably substantially 70 mm.

In this distance a structural element of the exhaust path is arrangeable between activation and side element.

The flap rotary axis can be arranged essentially in the middle of the flap and extend a longer longitudinal axis of the flap.

This way the torque is reduced and the flap can easily be turned.

The valve can comprise at least two, preferably three, more preferably four, in particular six, flaps. It is further conceivable to have more than six flaps.

This leads to an optimal distribution of opening cross section and torque on a flap rotary axis.

The flap rotary axis can have a length LR which corresponds to at least 105%, preferably at least 110%, more preferably at least 120% of the lengths of the flap FL.

This enables the connection of a structural element of an exhaust housing and an activation element to turn the flaps without losing cross section for exhaust inside the valve.

The flap rotary axis can comprise two parts, which preferably are connectable to each other wherein a first part essentially is arranged inside the frame and a second part essentially is arranged outside the frame and preferably connected to the activation element.

This design enables an easy installation of the valve since the first part of the valve can be positioned inside the exhaust housing comprising the first part of the flap rotary axis and afterwards the second part of the flap rotary axis can be connected to the first part of the flap rotary axis when the first part of the flap rotary axis is already installed in the exhaust housing. This leads to significantly reduced installation costs.

The connection between the first part and the second part of the flap rotary axis can be a hex key connection.

By using a hex key connection the rotary movement of the flap rotary axis is reliably transferred from the second part to the first part of the flap rotary axis and furthermore the installation of the complete flap rotary axis is extremely easy. Furthermore any angular deviations of the second part relative to the first part, for example by thermal expansion, can be easily compensated since the hex key connection allows for angular deviations.

As a matter of course similar connections like hex key connections such as square keys, octagonal keys or triangular keys can be used to connect the first part and the second part of the flap rotary axis.

The lengths of the first part of the flap rotary axis can be longer than the lengths of the second part of the flap rotary axis.

This enables an easy installation and simultaneously a stable flap rotary axis.

The flap rotary axis can be arranged in bearings in the side elements, preferably in a ceramics slide bearing and/or a graphite slide bearing.

A bearing in the side elements leads to a secure guiding of the turning movement of the flap rotary axis.

Ceramic or graphite bearings have a high durability even in the challenging exhaust surroundings of an exhaust housing, in particular in temperatures above 500°C.

The flap rotary axis can be arranged in at least one additional bearing inside the frame in between the side elements, preferably in a ceramics slide bearing and/or a graphite slide bearing.

For this purpose the frame additionally comprises a middle element being arranged substantially in parallel to the side elements which comprises the at least one bearing. As a matter of course there can be more than one middle element arranged inside the frame in case more stability of the flap rotary axis is needed.

The frame preferably comprises a top and a bottom element to increase the stability of the valve.

In particular the combustion engine or the exhaust gas aftertreatment system as described above may comprise an exhaust housing comprising a valve section and at least one valve as previously described.

The valve section of an exhaust housing is a section in which a valve can be positioned. The valve section comprises a structural element, in which the rotary axis can be arranged and which comprises enough stability such that the flap rotary axis can be turned in a stable way. The structural element therefore at least has a width of 50 mm such that a rotary axis having a diameter of 25 mm can be securely positioned in the structural element.

The valve section can be a structural plate of the exhaust housing.

This way the structural plate can be simultaneously used as connection point for the flap rotation axis.

The activation elements can be arranged outside the exhaust housing.

This way the activation elements are not in contact with exhaust and therefore more durable.

The valve can be arranged in the high pressure area of the engine and particular upstream of an SCR reactor.

In this high demanding surrounding of the exhaust housing the valve can optimally fulfill its function and is still very durable.

The activation elements can be electrical motors.

Electrical motors are easily controlled and easily exchanged. Furthermore, they are comparably cheap and can be bought as standard parts.

The structural element can comprise four openings, each opening accommodates one flap rotary axis.

This leads to a possibility to place a valve with four flaps in the exhaust housing.

The exhaust housing can comprise three or more valves, in particular seven valves.

This leads to the possibility to direct exhaust to one or two exhaust treatment devices or to direct the exhaust directly to the outlet of the exhaust housing. After the outlet, the exhaust is preferably directed to a turbocharger.

The combustion engine or the exhaust gas aftertreatment system as described above may comprise an exhaust housing, which may have at least one housing inlet for an exhaust gas of the internal combustion engine and at least one housing outlet for the exhaust gas. The housing may comprise an exhaust manifold and a first exhaust treatment area. The exhaust manifold may include the at least one housing inlet and at least one manifold outlet for guiding the exhaust gas to the first exhaust treatment area. The first exhaust gas treatment area may comprise a first and a second duct. A first exhaust treatment section may be arranged in the first duct and a second exhaust treatment section may be arranged in the second duct. The first exhaust gas treatment area further may comprise a bifurcation for splitting the exhaust gas into a first part for the first duct and a second part for the second duct. The bifurcation may be arranged upstream of the first and second duct.

The first duct may comprise a primary flow constriction, such that a flow distribution of the first and second duct is optimized.

Under normal operating conditions, without a flow constriction, a flow into one of the exhaust treatment sections may be larger than into the other. This leads in particular in asymmetric exhaust housings to a shortened lifetime of particular catalytic sections.

As a result of the flow constriction, a flow into the first exhaust treatment section is decreased while a flow into the second exhaust treatment section is increased. Thereby, the flow distribution between the first and second exhaust treatment sections can be optimized. For example, in one embodiment, the flow constriction may be arranged such that a flow into the first and second catalytic section is substantially equal.

One or all of the exhaust treatment section(s) may be a catalytic section. A catalytic section comprises a catalyst for a selective catalytic reaction (SCR). In alternative embodiments, the exhaust treatment sections may treat the exhaust gas in a selective non-catalytic reaction (SNCR). The catalytic section may comprise one or more layers. The layers may be standard and individually replaceable components.

The first and the second duct may be arranged in parallel. "In parallel" is understood as separating the exhaust gas into two streams. In particular embodiments, the first duct and the second duct guide a fluid at least partially substantially along the same direction. In other embodiments, the first and second ducts guide the fluid in opposing directions.

The exhaust gas treatment area may include a separation region or a division part or a furcation for separating the exhaust gas into the first part for the first duct and the second part for the second duct.

The bifurcation may separate the exhaust gas into two, three, or more parts. The first and the second duct a preferably adapted to guide the exhaust gas separately.

An inlet of the second duct may be arranged upstream of an inlet of the first duct. In such exhaust housings, guiding the flow distribution is particularly advantageous because the flow tends to concentrate in the downstream ducts. In these ducts the catalytic elements deplete faster due to the larger flow velocity.

In one embodiment, the exhaust first and second duct may be formed as a Z-type or U-Type manifold. The first and second duct may merge at their respective ends. Alternatively, the first and second duct may lead to separate exhaust housing outlets.

The flow constriction may be arranged at an inlet of the first duct, along the first duct or at an outlet of the first duct. In a preferred embodiment, the flow constriction is arranged at an inlet of the first duct. As a result of a pressure drop after the flow constriction, a pressure in the first exhaust treatment section is lower.

The exhaust manifold may additionally comprise a bypass. The bypass may be opened and closed with one or more bypass valves. The bypass valves may be arranged at an outlet of the exhaust manifold. The bypass bypasses the exhaust treatment sections. Thereby, the exhaust gas is directly guided from the exhaust manifold inlet to the exhaust housing outlet. This allows an energy saving configuration of the exhaust manifold.

A controller might be configured to control the valves such that in a first valve configuration the exhaust gas is guided through the first and second exhaust treatment sections and in a second valve configuration the exhaust gas is guided through the bypass.

The first and/or second duct may comprise a duct outlet valve. Thereby, only selected ducts may be operated. For example, if the catalytic elements in one of the catalytic sections are defective, the duct comprising this catalytic section may be closed.

Further, the exhaust manifold may comprise a controller configured to close the duct outlet valves, when the bypass is opened. Thereby, a backflow into the first and/or second duct when the bypass is opened may be prevented.

The exhaust manifold may comprise a manifold outlet valve. The manifold outlet valve may be arranged such that a flow into the exhaust gas treatment area or one of or both of the first and second ducts can be blocked when the manifold outlet valve is closed. Alternatively, the first and/or second duct may comprise individual inlet valves.

In one embodiment, the exhaust manifold comprises multiple inlets. The exhaust manifold may also comprise multiple outlets. In a preferred embodiment, the exhaust manifold comprises at least one inlet for each cylinder of the internal combustion engine.

The exhaust gas treatment area may comprise an exhaust gas collection chamber downstream of the first and second duct. The first and second duct may guide the exhaust gas to the gas collection chamber. The at least one exhaust manifold outlet may be arranged in the exhaust gas collection chamber. The exhaust gas collection chamber allows a mixing of the exhaust gas after the treatment of the exhaust gas.

Each catalytic section may comprise at least one catalytic element. The catalytic elements may be replaceable. The catalytic sections and/or the catalytic elements may be standard components and/or may have equal sizes. Thereby, a replacement of single catalytic sections and/or catalytic elements is particularly simple. The catalytic elements may be catalytic layers.

In one embodiment the first and second catalytic section may comprise two or three or more catalytic elements. Preferably both catalytic sections comprise two or three or more catalytic elements.

In one embodiment, the flow constriction is formed by at least one of: a baffle plate, a perforated plate, a valve, in particular a plate valve, one or more flaps and a constriction of a cross-section of the first duct. In one embodiment, the flow constriction is formed by a plate, which covers a part of the cross-section of the first duct.

The perforated plate is a preferred embodiment. A perforated plate is particularly simple and easy to make. Further, a retrofitting, i.e. adding a perforated plate to existing exhaust manifolds, is particularly simple.

As used herein, a perforated plate is a plate with one or more perforations through which a fluid can flow. The perforations may be circular, elliptical, squares, triangles, or any other suitable shape. In a preferred embodiment the perforations are regular and evenly distributed over the perforated plate. In one embodiment the perforations may be formed by elongated slits. In an alternative embodiment the perforated plate may comprise only one hole.

In one embodiment, the flow constriction is adjustable. Thereby, the flow constriction can be adjusted to the current fluid stream and balance the stream at any throughput. The flow constriction may in particular be a variable perforated plate.

The perforated plate may be variable for example by arranging two perforated plates above one another. One of the perforated plates may be moved relatively to the other to close some or all of the perforations. The perforated plate may be actuated actively, for example by a motor. Alternatively, the perforated plate may be actuated passively, for example by connecting to perforated plates with springs. Thereby, the perforated plate opens further, if a pressure increases.

As used herein, a baffle plate is a plate used to redirect a direction of a flow of a fluid.

In one embodiment, the flow constriction is designed such that turbulences are introduced. Turbulences may be introduced by varying the size of the perforations in relation to the cross-section of the first duct. Preferred ratios between a cross-section of the first duct immediately before the constriction and at the flow constriction are between 5% and 60%, further preferred between 10% and 40%.

A size of the flow constriction (i.e. an area of a smallest flow cross-section) may also be chosen in relation to a mass flow through the exhaust gas manifold. The exhaust housing may comprise an interface to receive information regarding the mass flow of exhaust gas from the engine. Additionally or alternatively the exhaust manifold may comprise a flow sensor. The flow sensor may be positioned at the exhaust manifold inlets and/or in one or more or all of the ducts. According to this information the flow constriction may be adjusted.

In one embodiment the flow constriction is a perforated plate which is arranged perpendicular to an intended flow direction. This is a particularly simple arrangement for the primary flow constriction.

The first exhaust treatment section may have a first capacity and the second exhaust treatment section may have a second capacity. The flow constriction may be designed such that a ratio of a volume stream through the first duct divided by a volume stream through the second duct corresponds to a ratio of the capacities of the catalytic section. Thereby, each exhaust treatment section is depleted at the same rate. Preferably, the first and second catalytic sections have the same capacity.

In one embodiment the primary flow constriction is designed, such that a throughput through the first and second exhaust treatment section is substantially equal. As a result, the exhaust gas is distributed evenly and thus an efficiency of the catalytic reaction is improved.

In one embodiment the first and second exhaust treatment section have a substantially equal throughput capacity. The throughput is defined by the size and material properties of each exhaust treatment section and the number of catalytic elements in the respective catalytic section.

In a preferred embodiment, the exhaust housing comprises a second exhaust gas treatment area. The first exhaust gas treatment area is adapted to treat a part of the exhaust gas and the second exhaust gas treatment area is adapted to treat another part of the exhaust gas. The second exhaust gas treatment area includes a third and a fourth duct. Further the second exhaust gas treatment area includes a bifurcation upstream of the third and fourth ducts for splitting the exhaust gas into a third part for the third duct and a fourth part for the fourth duct. A third and a fourth exhaust treatment section are arranged in the third and the fourth duct respectively. A secondary flow constriction is arranged in the third duct such that a flow throughput of the third and the fourth duct is optimized.

Thereby, a capacity of the exhaust manifold may be increased. In addition, second exhaust gas treatment area allows a compact construction of the catalytic sections. Further, a flow between the third and the fourth act is balanced.

In general, the third duct may be constructed similarly to the first duct. All features and particular embodiments mentioned in relation to the first duct also apply to the third duct. The same applies for the fourth and the second duct respectively.

In a preferred embodiment, first and second exhaust treatment areas are arranged symmetrically to each other. Preferably, the first and second exhaust treatment areas are plane symmetric. The first and second exhaust treatment areas may have identical capacities.

Non-limiting embodiments of the invention are described, by way of example only, with respect to the accompanying drawings, in which:

Fig. 1    shows a schematic representation of a first example of a combustion machine with an exhaust gas aftertreatment system in a cross-sectional view;

Fig. 2    shows a schematic representation of a valve with a set of valve flaps in a perspective view;

Fig. 3    shows a schematic representation of a second example of a combustion machine in a cross-sectional view;

Fig. 4    shows a cross-section of second example of an exhaust gas aftertreatment system;

Fig. 5    shows a cross-section of a third example of an exhaust gas aftertreatment system.

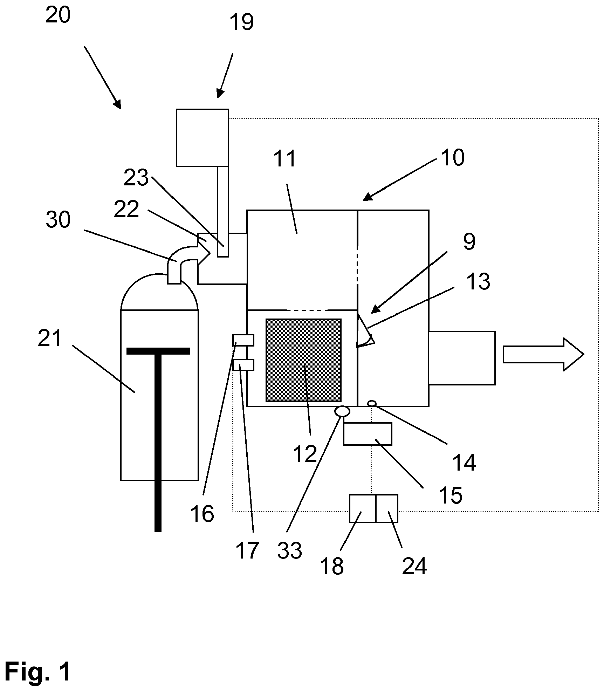

Figure 1 shows a schematic representation of a first example of a combustion engine 20 having at least one cylinder 21 with a cylinder outlet 30 and an exhaust gas aftertreatment system 10 in a cross-sectional view.

The exhaust gas aftertreatment system 10 comprises an exhaust gas receiver 11 and a SCR-reactor 12 which is arranged in or downstream the exhaust gas receiver 11.

The exhaust gas aftertreatment system 10 comprises a valve 9 with a flap 13, which is arranged downstream of a SCR-reactor 12.

The exhaust gas aftertreatment system 10 comprises a measuring device 14 for measuring the opening degree of the valve 9, for example comprising an optical sensor.

The exhaust gas aftertreatment system 10 comprises a control unit 15 for determining the exhaust gas flow velocity on the basis of the opening degree of the valve 9.

The exhaust gas aftertreatment system 10 comprises a temperature sensor 16, a pressure sensor 17 and a control unit 18 for determining the exhaust gas mass flow on the basis of the temperature, the pressure and the opening degree. The control unit 15 for determining the exhaust gas velocity and the control unit 18 for determining the exhaust gas mass flow may be formed as a single unit.

The exhaust gas aftertreatment system 10 further comprises a dosing unit 19 for a reducing agent. The reducing agent is preferably injectable into an exhaust gas inlet 22 by means of a nozzle 23.

The exhaust gas aftertreatment system 10 comprises a control unit 24 for determining the amount of reducing agent on the basis of the opening degree of the valve 9.

The control unit 24 for determining the amount of reducing agent and the control unit 18 for determining the exhaust gas mass flow may be formed as a single unit. The control unit 18 for determining the exhaust gas mass flow may be a part of the control unit 24 for determining the amount of reducing agent.

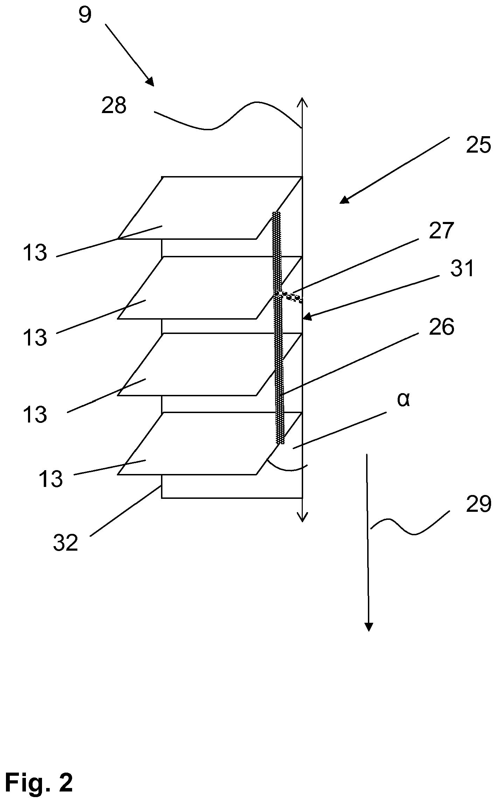

Figure 2 shows a schematic representation of a valve 9 having a set 25 of valve flaps 13 in a perspective view. The valve flaps 13 of the set 25 are connected to each other by a connector 26, such that all valve flaps 13 have same angular position $\alpha$. For determining the opening degree of the valve 9 the measurement of the angular position $\alpha$ would suffice.

One valve flap 13 is pretensioned by a spring 27.

The flaps close due to gravity and due to the tension of the spring 27, even when the spatial orientation 28 of the valve 9 does not correspond to the gravity vector 9.

In an ideal position of the combustion engine 20 (see figure 1) the special orientation 28 of valve 9, for example a vertical part 31 of the valve frame 32 corresponds to the gravity vector 29 or has at least a fixed position with respect to the gravity vector 29.

The exhaust gas aftertreatment system 10 comprises a measuring device 33 (see figure 1) for determining of the spatial orientation 28 of the valve 9 with respect to the direction of the gravity vector 29. The deviation may be taken into account for calculating the flow velocity from the opening degree.

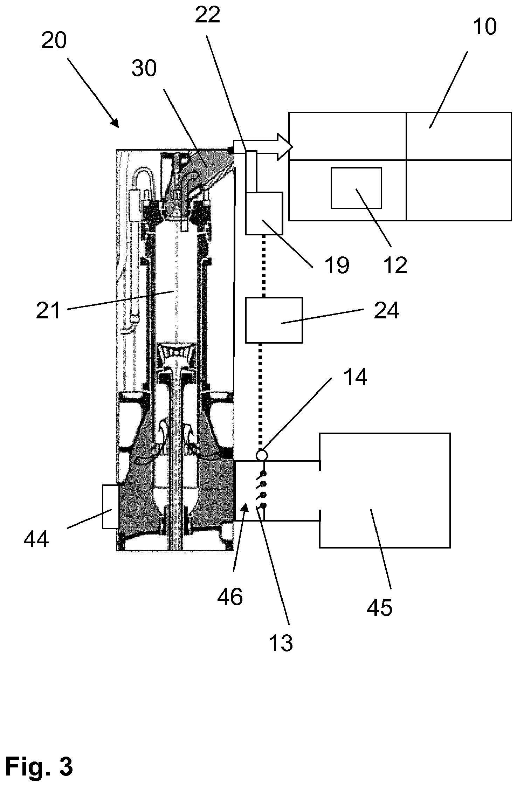

Figure 3 shows a schematic representation of a second example of a combustion machine 20 in a cross-sectional view.

The combustion engine 20 comprising one cylinder 21 with a cylinder outlet 30 for an exhaust gas of the cylinder 21 and an exhaust gas aftertreatment system 10 with a SCR reactor 12.

The combustion engine 20 comprises a dosing unit 19 for a reducing agent. Said reducing agent is injectable into an exhaust gas inlet 22.

Air is introduced in the cylinder 21 from a scavenge air receiver 44, which is fed from a turbocharger 45.

The scavenge air receiver 44 comprises an inlet valve 46 with flaps 13.

The valve 46 is arranged upstream the SCR reactor 12.

The combustion engine 20 further comprises a measuring device 14 for measuring the opening degree of the valve 46 and the combustion engine 20 comprises a control unit 24 for determining the amount of reducing agent on the basis of the opening degree. For determining the amount of reducing agent information about the temperature, the pressure and/or the mass flow of the fuel has also to be considered.

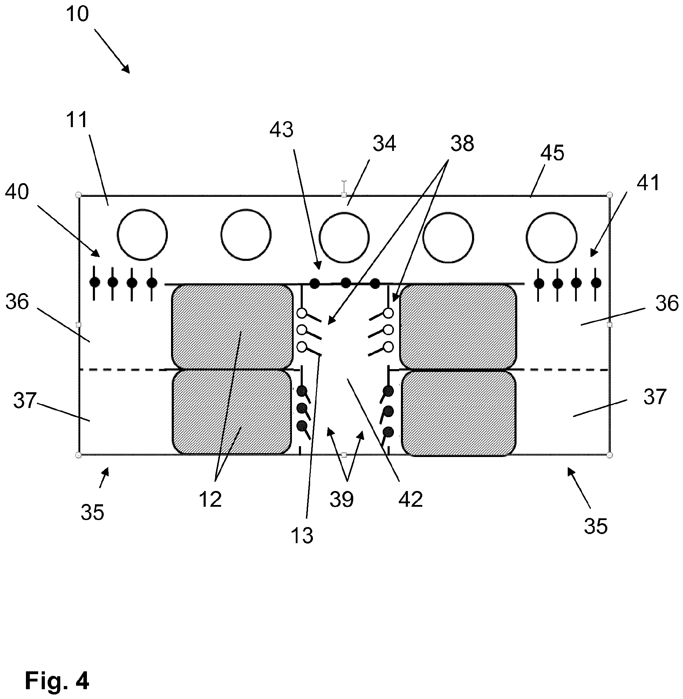

Figure 4 shows a cross-section of a second example of an exhaust gas aftertreatment system 10.

The exhaust gas receiver 11 of the exhaust gas aftertreatment system 10 comprises an exhaust manifold 34 and two exhaust treatment areas 35, each with a first treatment section 36 and a second treatment section 37. In each section 36, 37 there is arranged a SCR reactor 12, and each section may comprise a reactor outlet valve 38, 39.

Each treatment area 35 further comprises a reactor inlet valve 40, 41.

The exhaust gas aftertreatment system 10 also comprises a bypass 42. The bypass 42 may be opened and closed with a bypass valve 43. The bypass valve 43 is arranged as an outlet of the exhaust manifold 34. The bypass 42 bypasses the exhaust treatment sections 36, 37.

The reactor outlet valves 38, 39 of the treatment sections 36, 37 are non-return valves. Hence in case the exhaust gas is bypassed the non-return valves 38, 39 prevent exhaust gas from streaming in the SCR reactors 12.

The reactor outlet valve 39 of the second treatment sections 37 are a flow control valves, whereas the reactor outlet valves 38 of the first treatment sections 38 are passive valves, which open due to the pressure of the gas flow.

The flow control valves 39 may for example be prevented from full opening such that a bigger amount of gas will flow through the first sections 36 as compared to a free flow of gas through the sections 36, 37.

The exhaust gas aftertreatment system 10 may also comprise a measurement device 14 (not disclosed in the figure) for measuring the opening degree of the valves 38, 39. The measurement device 14 may be arranged outside the housing 45 of the exhaust gas aftertreatment system 10. The measurement device 14 may comprise a sensor, which couples to the shaft of a valve flap 13.

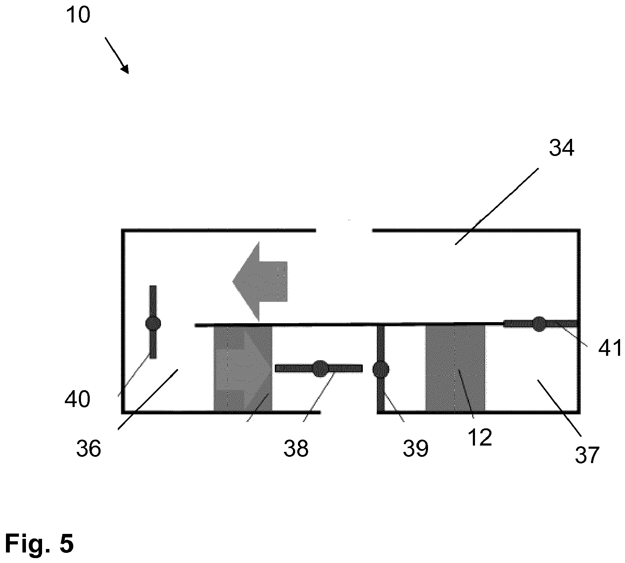

Figure 5 shows a cross-section of a third example of an exhaust gas aftertreatment system 10.

The exhaust gas aftertreatment system 10 comprises an exhaust manifold 34, a first treatment section 37 and a second treatment section 36. In each section 36, 37 there is arranged a SCR reactor 12, and each section 36, 37 may comprise a reactor outlet valve 38, 39 and a reactor inlet valve 40, 41.

The reactor inlet valve 41 is a first flow control valve and the reactor outlet valve 39 is a second flow control valve.

Valves 38, 40 may be passive valves, which open due to a pressure of exhaust gas.

The reactor outlet valve 39 and the reactor inlet valve 41 are kept closed during a heating-up time, such that during the heating-up time, the complete exhaust gas passes only the second section 36.

**Claims**

1. Exhaust gas aftertreatment system (10) for a combustion engine (20) having at least one cylinder (21), preferably a large vessel engine with at least one cylinder (21) having an inner diameter of at least 200mm, comprising an exhaust gas receiver (11) and preferably a SCR-reactor (12) being arranged in or downstream the exhaust gas receiver (11), the exhaust gas aftertreatment system (10) comprising at least one valve (9), preferably with a flap (13), preferably arranged downstream of a SCR-reactor (12), **characterized in that**
the exhaust gas aftertreatment system (10) comprises a measuring device (14) for measuring the opening degree of the valve (9), preferably comprising a sensor for measuring the angular position ($\alpha$) of at least one valve flap (13).

2. Exhaust gas aftertreatment system (10) according to claim 1, wherein the exhaust gas aftertreatment system (10) comprises a control unit (15) for determining the exhaust gas flow velocity on the basis of the opening degree of the valve (9), preferably of the angular position ($\alpha$) of at least one valve flap (13).

3. Exhaust gas aftertreatment system (10) according to one of the preceding claims, wherein the exhaust gas aftertreatment system (10) comprises a temperature sensor (16) and a pressure sensor (17) and a control unit (18) for determining the exhaust gas mass flow on the basis of the temperature, the pressure and the opening degree, preferably the angular position ($\alpha$).

4. Exhaust gas aftertreatment system (10) according to one of the preceding claims, wherein the exhaust gas aftertreatment system (10) comprises a dosing unit (19) for a reducing agent, wherein said reducing agent is preferably injectable into an exhaust gas inlet (22) by means of a nozzle (23), and the exhaust gas aftertreatment system (10) comprises a control unit (24) for determining the amount of reducing agent on the basis of the opening degree, preferably the angular position ($\alpha$).

5. Exhaust gas aftertreatment system (10) according to one of the preceding claims, wherein the exhaust gas aftertreatment system (10) comprises a set (25) of valve flaps (13), preferably being arranged downstream of a SCR-reactor (12), and wherein the exhaust gas aftertreatment system (10) comprises at least one sensor for measuring the angular positions of at least one of the valve flaps (13) in the set (25) of valve flaps (13).

6. Exhaust gas aftertreatment system (10) according to one of the preceding claims, wherein the exhaust gas aftertreatment system (10) comprises a set (25) of valve flaps (13), preferably being arranged downstream of the SCR-reactor (12), and wherein the valve flaps (13) of the set (25) are connected to each other, preferably by a connector (26), such that all valve flaps (13) have same angular position ($\alpha$).

7. Exhaust gas aftertreatment system (10) according to one of the preceding claims, wherein the at least one valve (9) of the exhaust gas aftertreatment system (10) comprises at least one valve flap (13) and the at least one valve flap (13) closes due to gravity,
wherein preferably the exhaust gas aftertreatment system (10) comprises a measuring device (33) for determination of the spatial orientation (28) of the valve (9) with respect to the direction of the gravity vector (29), in particular for determining the deviation of a current orientation (28) of a vertical part (31) of a valve frame (32) with respect to the gravity vector (29), for example a gyroscope.

8. Exhaust gas aftertreatment system (10), preferably according to one of claims 1-7, for a combustion engine (20) having at least one cylinder (21), comprising a SCR-reactor (12) and at least one reactor outlet valve (9) arranged downstream of a SCR-reactor (12), wherein at least one reactor outlet valve (38, 39) is an non-return valve, preferably comprising non-return-flaps.

9. Exhaust gas aftertreatment system (10) according to claim 8, wherein the exhaust gas aftertreatment system (10) comprises at least two SCR-reactors (12), wherein at least one reactor inlet valve (40, 41) and/or at least one reactor outlet valve (38, 39) is a flow control valve (39).

10. Combustion engine (20) having at least one cylinder (21) with a cylinder outlet (30) for an exhaust gas, preferably a large vessel engine with at least one cylinder (21) having an inner diameter of at least 200mm, comprising an exhaust gas aftertreatment system (10) according to at least one of claims 1 to 9.

11. Combustion engine (20), preferably according to claim 10, comprising at least one cylinder (21) with a cylinder outlet (30) for an exhaust gas and an exhaust gas aftertreatment system (10), preferably according to at least one of claims 1-9, comprising a SCR reactor (12), the combustion engine (20) comprising at least one valve (9; 46), preferably comprising at least one flap (13), arranged upstream and/or downstream the SCR reactor (12), and the combustion engine (20) comprising a measuring device (14) for measuring the opening degree of the valve (9; 46), preferably an angular position ($\alpha$) of at least one valve flap (13), wherein the combustion engine (20) comprising a dosing unit (19) for a reducing agent, said reducing agent preferably being injectable into an exhaust gas inlet (22), wherein the combustion engine (20) comprises a control unit (24) for determining the amount of reducing agent on the basis of the opening degree.

12. Combustion engine (20) according to claim 11, wherein the at least one valve (46) is arranged in a scavenge air receiver (44).

13. Method for reducing NO$_x$ emissions in a combustion engine (20), preferably a large vessel engine with at least one cylinder (21) having an inner diameter of at least 200mm, in particular a two stroke diesel engine, in particular in a combustion engine (20) according to one of claims 10 to 12,
**characterized in that**
the amount of a reducing agent, which is injected into an exhaust gas inlet (22) is determined by means of an adjustment parameter, said adjustment parameter being derived from the measurement of the opening degree of at least one valve (9; 46), in particular from the measurement of an angular position ($\alpha$) of at least one valve flap (13), the at least one valve (9; 46) being arranged upstream and/or downstream of the SCR-reactor (12).

14. Method according to claim 13, wherein the temperature and the pressure are measured and the mass flow of the exhaust gas is determined on the basis of the temperature, the pressure and the opening degree of the at least one valve (9; 46), in particular of the angular position ($\alpha$) of at least one valve flap (13).

15. Method according to claim 13 or 14, wherein the massflow of the consumed fuel is determined, and the massflow of the exhaust gas is determined on the basis of the massflow of the consumed fuel and on the basis of the opening degree of the at least one valve (9; 46), in particular on the basis of the angular position of a valve flap (13), the valve (9) arranged in the scavenge air receiver (44).

16. Method according to one of claims 13 to 15, wherein the valve (9; 46) comprises a valve flap (13) and a deviation of the current valve orientation (28) with respect to the gravity vector (29) is measured and preferably the determination of the massflow is corrected due to the deviation.

17. Use of flaps (13) in an exhaust gas aftertreatment system (10) for determination of the mass flow of an exhaust gas.

**Fig. 1**

**Fig. 2**

**Fig. 3**

**Fig. 4**

**Fig. 5**

Europäisches
Patentamt

European
Patent Office

Office européen
des brevets

# EUROPEAN SEARCH REPORT

Application Number

EP 18 19 7416

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 261 477 A1 (ISUZU MOTORS LTD [JP]) 15 December 2010 (2010-12-15) | 1-5, 10-17 | INV. F01N3/20 F01N9/00 |
| A | * paragraphs [0001] - [0028], [0031] - [0100] * <br> * figures 1-7 * | 6-9 | |
| X | EP 2 653 692 A1 (TOYOTA MOTOR CO LTD [JP]) 23 October 2013 (2013-10-23) | 1-7,10, 17 | |
| A | * paragraphs [0001] - [0021], [0023] - [0050] * <br> * figures 1-4 * | 8,9, 11-13 | |
| X | EP 3 176 396 A1 (WINTERTHUR GAS & DIESEL LTD [CH]) 7 June 2017 (2017-06-07) | 8 | |
| Y | * paragraphs [0001] - [0041], [0043] - [0051] * <br> * figures 1, 2 * | 9 | |
| Y | US 2018/258823 A1 (NORRIS COLIN L [US] ET AL) 13 September 2018 (2018-09-13) <br> * paragraphs [0001] - [0011], [0016] - [0060] * <br> * figures 1-4 * | 9 | TECHNICAL FIELDS SEARCHED (IPC) <br><br> F01N |
| A | EP 2 527 611 A1 (WAERTSILAE SCHWEIZ AG [CH]) 28 November 2012 (2012-11-28) <br> * the whole document * | 6,7 | |

The present search report has been drawn up for all claims

| Place of search | Date of completion of the search | Examiner |
|---|---|---|
| Munich | 4 December 2018 | Buecker, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 628 835 A1**

## ANNEX TO THE EUROPEAN SEARCH REPORT
## ON EUROPEAN PATENT APPLICATION NO.

EP 18 19 7416

04-12-2018

| Patent document cited in search report | | Publication date | Patent family member(s) | | Publication date |
|---|---|---|---|---|---|
| EP 2261477 | A1 | 15-12-2010 | AU | 2008352471 A1 | 17-09-2009 |
| | | | CN | 101965440 A | 02-02-2011 |
| | | | EP | 2261477 A1 | 15-12-2010 |
| | | | JP | 5272455 B2 | 28-08-2013 |
| | | | JP | 2009216019 A | 24-09-2009 |
| | | | US | 2011041481 A1 | 24-02-2011 |
| | | | WO | 2009113211 A1 | 17-09-2009 |
| EP 2653692 | A1 | 23-10-2013 | CN | 103261621 A | 21-08-2013 |
| | | | EP | 2653692 A1 | 23-10-2013 |
| | | | JP | WO2012081061 A1 | 22-05-2014 |
| | | | US | 2013263579 A1 | 10-10-2013 |
| | | | WO | 2012081061 A1 | 21-06-2012 |
| EP 3176396 | A1 | 07-06-2017 | CN | 107035473 A | 11-08-2017 |
| | | | EP | 3176396 A1 | 07-06-2017 |
| | | | JP | 2017101676 A | 08-06-2017 |
| | | | KR | 20170066259 A | 14-06-2017 |
| US 2018258823 | A1 | 13-09-2018 | US | 2012204542 A1 | 16-08-2012 |
| | | | US | 2015369108 A1 | 24-12-2015 |
| | | | US | 2018258823 A1 | 13-09-2018 |
| | | | WO | 2012051273 A1 | 19-04-2012 |
| EP 2527611 | A1 | 28-11-2012 | CN | 102797541 A | 28-11-2012 |
| | | | EP | 2527611 A1 | 28-11-2012 |
| | | | JP | 2012246920 A | 13-12-2012 |
| | | | JP | 2018021557 A | 08-02-2018 |

EPO FORM P0459

For more details about this annex : see Official Journal of the European Patent Office, No. 12/82

**REFERENCES CITED IN THE DESCRIPTION**

**Patent documents cited in the description**

- DE 102016205299 A1
- DE 102016205299

- EP 3050615 A1